# EUROPÄISCHE PATENTSCHRIFT

(11) **EP 1 912 752 B1**
(45) Veröffentlichungstag und Bekanntmachung des Hinweises auf die Patenterteilung: **15.06.2011**
(21) Anmeldenummer: 06776789.7
(22) Anmeldetag: 11.08.2006
(51) Int. Cl.: B21D 53/88

(54) **VORRICHTUNG UND VERFAHREN ZUR HERSTELLUNG METALLISCHER WABENKÖRPER MIT MINDESTENS EINEM FORMSEGMENT**
PROCESS AND DEVICE FOR PRODUCING METALLIC HONEYCOMB BODIES WITH AT LEAST ONE SHAPED SEGMENT
DISPOSITIF ET PROCEDE POUR REALISER DES CORPS EN NID D'ABEILLES METALLIQUES AVEC AU MOINS UN SEGMENT DE FAÇONNAGE

(30) Priorität: 12.08.2005 DE 102005038572
(43) Veröffentlichungstag der Anmeldung: 23.04.2008
(73) Patentinhaber: Emitec Gesellschaft für Emissionstechnologie mbH, 53797 Lohmar (DE)
(72) Erfinder: VOIT, Michael, 51375 Leverkusen (DE); FRECHEN, Frank, 53797 Lohmar (DE)
(74) Vertreter: Rössler, Matthias
(86) Internationale Anmeldenummer: PCT/EP2006/007970
(87) Internationale Veröffentlichungsnummer: WO 2007/020021

(56) Entgegenhaltungen:
- EP-A1- 0 245 736
- WO-A-96/30137
- DE-A1- 19 521 685
- JP-A- 8 257 361

## Beschreibung

Die Erfindung bezieht sich auf eine Vorrichtung zum Wickeln zumindest teilweise strukturierten Metallfolien zu einer Wabenstruktur gemäß dem Oberbegriff des Patentanspruchs 1 sowie ein Verfahren zur Herstellung eines Wabenkörpers mit zumindest teilweise strukturierten Metallfolien gemäß dem Oberbegriff des Patentanspruchs 7.

Eine solche Vorrichtung bzw. ein solches Verfahren sind in der WO-A-9700135 offenbart.

Die Erfindung betrifft insbesondere Wabenkörper, die in ein Abgassystem integriert werden können und dort bei der Beseitigung bzw. Konvertierung von im Abgas enthaltenen Schadstoffen mitwirken. So ist beispielsweise bekannt, Wabenkörper als Trägerkörper für unterschiedliche Beschichtungen einzusetzen, um entsprechende chemische Reaktionen mit dem Abgas zu erzielen, beispielsweise als katalytischer Konverter, Adsorber, etc.. Darüber hinaus können solche Wabenstrukturen auch dazu dienen, einen offenen oder geschlossenen Partikelfilter zu bilden, der wiederum gegebenenfalls beschichtet sein kann. Schließlich ist auch bekannt, derartige metallische Wabenkörper zumindest zeitweise mit Strom zu beaufschlagen, so dass dieser die Funktion eines Heizelements erfüllt, oder den metallischen Wabenkörper mit Mikrostrukturen zu versehen, so dass dieser als Strömungsmischer wirkt.

Grundsätzlich werden vor allem zwei typische Bauformen für metallische Wabenkörper unterschieden. Eine Bauform, für die die DE 29 02 779 typische Beispiele zeigt, ist die spiralige Bauform, bei der im wesentlichen eine glatte und eine gewellte Metallfolie aufeinander gelegt und spiralig aufgewickelt werden. Bei einer anderen Bauform wird der Wabenkörper aus einer Vielzahl von abwechselnd angeordneten glatten und gewellten oder unterschiedlich gewellten Metallfolien aufgebaut, wobei die Metallfolien zunächst einen oder mehrere Stapel bilden, die miteinander verschlungen werden. Dabei kommen die Enden aller Metallfolien außen zu liegen und können mit einem Gehäuse oder Mantelrohr verbunden werden. Dadurch entstehen zahlreiche Verbindungen, die die Haltbarkeit des Wabenkörpers erhöhen. Typische Beispiele dieser Bauformen sind in der EP 0 245 737 oder der WO 90/03220 beschrieben.

Seit langem ist auch bekannt, die Metallfolien mit zusätzlichen Strukturen zu versehen, um die Strömung zu beeinflussen und/oder eine Quermischung zwischen den einzelnen Strömungskanälen zu erreichen. Typische Beispiele für solche Ausgestaltungen sind die WO 91/01178, die WO 91/01807 und die WO 90/08249. Schließlich gibt es auch noch Wabenkörper in konischer Bauform, die gegebenenfalls auch mit weiteren zusätzlichen Strukturen zur Strömungsbeeinflussung ausgeführt sind, siehe beispielsweise in der WO 97/49905. Darüber hinaus können Wabenkörper auch mit einer Aussparung für einen Sensor versehen sein, wie es in der DE 88 16 154 U1 beschrieben ist.

Bei der Herstellung des Wabenkörpers ist der Wickelvorgang, also der Vorgang, bei dem eine Formgebung des Wabenkörpers von einem flächigen Stapel hin zu einem zylinderförmigen bzw. konischen Körper vorgenommen wird, technisch problematisch, da bevorzugt sehr dünne Metallfolien zum Einsatz kommen sollen. Die dünnen Metallfolien haben den Vorteil, dass sie pro Volumen des Wabenkörpers eine erhöhte Anzahl von Kanälen ermöglichen, wobei gleichzeitig die oberflächenspezifische Wärmekapazität des Wabenkörpers sinkt und dieser damit schneller den thermischen Wechselbeanspruchungen im Abgassystem folgt. Allerdings besteht auch die Gefahr, dass beispielsweise die gewellten Metallfolien während des Wickelns deformiert werden können, bzw. sich unterschiedliche Kanalformen beim Wickeln ausbilden. Dies hat negativen Einfluss auf das Strömungsverhalten des Abgases später im Abgassystem.

Eine bereits sehr gut funktionierende Methode zur Herstellung metallischer Wabenkörper geht aus der WO 97/00135 hervor. Dort wird eine Vorrichtung zum Herstellen eines Wabenkörpers aus wenigstens einem Stapel aus einer Vielzahl von zumindest teilweise strukturierten Blechen vorgeschlagen, wobei mindestens zwei Formsegmente vorgesehen sind. Jedes Formsegment ist jeweils um eine Schwenkachse, die jeweils parallel zur Achse der Umschlingungsrichtung verläuft, gegen den Drehsinn der Umschlingungseinrichtung verschwenkbar. Durch das Verschwenken eines jeden Formsegments gegen den Drehsinn der Umschlingungsrichtung wird verhindert, dass die Blechstapel beim Schließen der Form gestaucht werden. Dort wurde erkannt, dass es günstiger ist, wenn das als Widerlager fungierende Formsegment unmittelbar an den Stapeln anliegt. Der noch nicht umschlungene Abschnitt eines jeden Stapels ist frei. Es entstehen daher keine wesentlichen Beanspruchungen des noch nicht umschlungenen Abschnitts des Stapels, so dass dort eine Biegebeanspruchung vermieden wird.

Die Wabenkörper können sowohl in mobilen Abgasanlagen von Verbrennungskraftmaschinen (z. B. Ottomotoren, Dieselmotoren und dergleichen) als auch im stationären Betrieb eingesetzt werden. In diesem Zusammenhang sind insbesondere auch Wabenkörper mit einem relativ großen Durchmesser im Einsatz, wobei bei deren Herstellung besondere technische Schwierigkeiten vorliegen. So ist beispielsweise zu berücksichtigen, dass für einen zylindrischen metallischen Wabenkörper nach Bauform einer Spirale mit einem Durchmesser von mehr als 150 mm Metallfolien von einer Länge über 10000 mm und einem Gewicht von etwa 1500 g oder mehr verwendet werden müssen.

Auch bei den Bauformen mit den Stapeln von Metallfolien müssen relativ dicke und lange Stapel miteinander verbunden werden. Dies macht einerseits die Handhabung der Metallfolien und insbesondere den Wickelvorgang schwierig. Beim Wickelvorgang sind die Krafteinleitpunkte üblicherweise weiter vom zentralen Bereich der Wickelvorrichtung entfernt, so dass es schwierig ist, eine gleichförmige Krafteinleitung über den gesamten Querschnitt und damit auch einen gleichförmigen Aufbau des Wabenkörpers prozesssicher im Rahmen einer Serienfertigung zu gewährleisten. Darüber hinaus werden beim Wickeln eine Vielzahl von Reibungsstellen erzeugt, so dass während dieses Prozesses bei großen WabenStrukturen hohe Kräfte aufzubringen sind, wodurch jedoch die Gefahr einer Deformierung der Metallfolien zunimmt.

Schließlich sei noch auf die (gattungsfremde) WO-A1-96/30137 hingewiesen, die eine Bandhaspel mit mindestens einer gegen einen Haspeldorn mittels einer Stelleinrichtung anstellbaren Andrückrolle zum Anpressen von bandförmigem Wickelgut an den Haspeldorn offenbart. Dazu ist die Andrückrolle an einem Haltearm drehbar sowie gegenüber dem Haspeldorn in etwa radialer Richtung beweglich gelagert, Der Haltearm ist mittels der Stelleinrichtung gegen den Haspeldorn bewegbar und anpressbar. Während des Aufwickelvorgangs wird dort die Andrückrolle beim Annähern des Bandanfanges um mindestens die Banddicke vom Hapseldorn entfernt.

Hiervon ausgehend ist es Aufgabe der vorliegenden Erfindung, die mit Bezug auf den Stand der Technik geschilderten technischen Probleme zumindest teilweise zu lösen. Insbesondere soll eine Vorrichtung zum Wickeln zumindest teilweise strukturierter Metallfolien zu einer Wabenstruktur angegeben werden, die prozesssicher auch die Fertigung von großen Wabenkörpern ermöglicht und gleichzeitig die Gefahr von Deformationen der Metallfolie beim Wickeln reduziert. Des weiteren sollen ein Verfahren zur Herstellung eines Wabenkörpers, sowie für den Einsatz in mobilen Abgasanlagen geeignete Wabenstrukturen bzw. Wabenkörper angegeben werden.

Diese Aufgaben werden gelöst mit einer Vorrichtung gemäß den Merkmalen des Patentanspruchs 1. Besondere Ausgestaltungen dieser Vorrichtung sowie damit im Zusammenhang stehende Verfahren, sind in den abhängig formulierten Patentansprüchen genannt.

Die Vorrichtung zum Wickeln zumindest teilweise strukturierter Metallfolien zu einer Wabenstruktur umfasst wenigstens
- mindestens einen Umschlingungsdorn in einem zentralen Bereich der Vorrichtung, der eine Aufnahme für mindestens eine Metallfolie aufweist,
- Formsegmente, welche wenigstens ein Führungselement zum Führen der mindestens einen Metallfolie während des Wickelns und wenigstens eine schwenkbare Klemmbacke aufweisen, wobei, die Formsegmente in einer Translationsrichtung vom zentralen Bereich weg bewegbar sind und die schwenkbaren Klemmbacken (8) in ihrer ausgeschwenkten Position den zentralen Bereich der Vorrichtung vollständig umschließen, wobei sie damit die Außenkontur der Wabenstruktur abbilden.

Dabei zeichnet sich die Vorrichtung dadurch aus, dass das wenigstens eine Führungselement mit mindestens einem Rollkörper ausgebildet ist. Zunächst sei angemerkt, dass unter dem Begriff "Wickeln" nicht nur das spiralförmige Aufwickeln der Metallfolien verstanden wird, sondern auch das miteinander Umbiegen. Verwinden bzw. Verschlingen von Metallfolien umfasst ist, so dass diese beispielsweise nach Art eines S, W, M, V und dergleichen umgeformt werden. Grundsätzlich ist möglich, dass eine Metallfolie teilweise strukturiert und teilweise glatt ausgeführt ist, bevorzugt werden jedoch vollständig glatte und vollständig strukturierte Metallfolien miteinander zu einer Wabenstruktur gewickelt.

Die Vorrichtung umfasst mindestens einen Umschlingungsdorn. Genau ein Umschlingungsdorn ist vorzugsweise dann vorgesehen, wenn ein spiralförmige Wickeln zum Aufbau der Wabenstruktur durchgeführt werden soll. Dabei werden die Metallfolien mit dem Umschlingungsdorn lösbar verbunden, der während der Herstellung selbst eine rotatorische Bewegung ausführt und dabei die Metallfolien aufwickelt. Werden mehrere Stapel von Metallfolien gleichzeitig miteinander verwunden, sind bevorzugt eine gleiche Anzahl von Umschlingungsdorne wie Stapel Metallfolien vorzusehen. Diese sind vorteilhafterweise mit einem gleichen Abstand und in gleicher Teilung zu einem Mittelpunkt der Vorrichtung zu positionieren. Eine Aufnahme für mindestens eine Metallfolie kann beispielsweise mit dem Umschlingungsdorn derart gebildet sein, dass Mittel vorgesehen sind, die eine Relativbewegung der mindestens einen Metallfolie zum Umschlingungsdorn im wesentlichen verhindern.

Des weiteren ist mindestens ein Formsegment vorgesehen. Das Formsegment bildet eine Art Widerlager, welches den Aufbau der Wabenstruktur während des Wickelns von außen unterstützt. Dazu weist das Formsegment wenigstens ein Führungselement auf, mittels dessen die Metallfolien in den zentralen Bereich geführt werden. Dabei gleiten die Metallfolien insbesondere an dem Führungselement vorbei in den zentralen Bereich hinein. Das Formsegment weist außerdem eine schwenkbare Klemmbacke auf, die so ausgestaltet ist, dass sie hin zum zentralen Bereich verschwenkbar ist. Die Klemmbacke hat insbesondere die Aufgabe, aktiv Teilbereiche, insbesondere Endbereiche, der Metallfolien hin zum zentralen Bereich der Vorrichtung zu bewegen. Dabei umschließen die Klemmbacken in ihrer ausgeschwenkten Position den zentralen Bereich der Vorrichtung vollständig, wobei sie damit die Außenkontur der Wabenstruktur abbilden. Bevorzugt sind mindestens 3 Formsegmente vorgesehen, gerade bei größeren Wabenstrukturen hat die Vorrichtung beispielsweise 3, 4 oder 5 Formsegmente.

Bezüglich des wenigstens einen Führungselements des Formsegment wird nun weiter vorgeschlagen, dass mindestens ein Rollkörper vorgesehen ist. Wie bereits vorstehend ausgeführt, gleitet die mindestens eine Metallfolie an dem Führungselement entlang, wenn der Umschlingungsdorn in Rotation versetzt wird. Dadurch entsteht während des Wickelprozesses Reibung beim Kontakt der Metallfolie mit dem Führungselement. Die Bereitstellung eines Rollkörpers in diesem Bereich hat nun zur Folge, dass die Reibung reduziert wird, da sich der Rollkörper an die Metallfolie anlehnt und während des Vorbeiführen der Metallfolie an der Oberfläche abrollt. Grundsätzlich ist möglich, dass mehrere Rollkörper an einem Führungelement vorgesehen und während des Wickelprozesses mit der mindestens einen Metallfolie in Kontakt sind, bevorzugt ist jedoch die Vorsehung eines einzelnen Rollkörpers pro Führungselement. Die verminderte Reibung an dieser Stelle hat beachtlichen Einfluss auf die mit dem Umschlingungsdorn aufzubringenden Kräfte während des Wickelprozesses, die nämlich deutlich geringer sind. Außerdem wird die Standzeit des Formsegmentes erhöht. Schließlich ist auch zu berücksichtigen, dass ein reduzierter Abrieb der Metallfolien stattfindet, so dass die Instandhaltung einer solchen Vorrichtung vereinfacht wird. All diese Aspekte führen insbesondere bei großen Wabenstrukturen zu einem noch gleichmäßigeren Aufbau, wodurch im späteren Einsatz in einer Abgasanlage ein gezieltes Strömungsverhalten der Abgase durch den Wabenkörper erzielbar ist.

Gemäß einer Weiterbildung der Vorrichtung ist das mindestens eine Formsegment relativ zu dem mindestens einen Umschlingrungsdorn bewegbar. Damit ist insbesondere gemeint, dass das Formsegment insgesamt translatorisch zum zentralen Bereich der Vorrichtung verschiebbar ist. Diese translatorische Bewegung ist insbesondere bei zu erzeugenden runden Wabenstrukturen bevorzugt radial auswärts gerichtet ausgehend vom zentralen Bereich der Vorrichtung. So kann das Formsegment beispielsweise während des Aufbaus der Wabenstruktur mit zunehmenden Durchmesser nach außen, weg vom zentralen Bereich der Vorrichtung, bewegt werden, so dass zu jedem Zeitpunkt des Wickelns ein Kontakt des Formsegmentes über das Führungselement mit der mindestens einen Metallfolie sichergestellt ist. Zur grundsätzlichen Funktion bzw. dem grundsätzlichen Aufbau einer solchen Vorrichtung mit relativ bewegbaren Formsegmenten wird auf den Inhalt der WO 97/00135 verwiesen, der hier vollumfänglich mit zum Gegenstand der Beschreibung gemacht wird.

Weiterhin ist es vorteilhaft, dass mindestens ein Formsegment mit einem führungselement und einer Klemmbacke ausgeführt ist, wobei das Führungselement und die Klemmbacke aneinander angrenzend angeordnet sind. Die Bereitstellung lediglich eines einzelnen Führungselementes gewährleistet einerseits eine gute Führung der mindestens einen Metallfolie, stellt aber, auf der anderen Seite auch sicher, dass nur geringe Reibungskräfte vorliegen. Das Führungselement und die Klemmbacke sind dabei bevorzugt einteilig hergestellt, wobei das Führungselement beispielsweise ein hervorstehender Bereich der Klemmbacke ist. Dabei ist zu berücksichtigen, dass damit auch der mindestens eine Rollkörper in unmittelbare Nähe zur Klemmbacke positioniert ist bzw. an diese angrenzt.

Weiter wird vorgeschlagen, dass die wenigstens eine Klemmbacke des mindestens einen Formsegments eine Schwenkachse aufweist, die mit einer Rotationsachse des mindestens einen Rollkörpers übereinstimmt. Bei einer solchen Anordnung des Rollkörpers ist gewährleistet, dass der Rollkörper auch in der ausgeschwenkten Position der Klemmbacke mit den Metallfolien in Kontakt steht, und die Klemmbacke den sich anschließenden Teil der Metallfolie hin zum zentralen Bereich bewegt.

Gemäß einer bevorzugten Ausführungsvariante bildet wenigstens ein Führungselement des mindestens einen Formsegments eine Anlagefläche für die mindestens eine Metallfolie, wobei mindestens 50 % der Anlagefläche mit dem mindestens einen Rollkörper gebildet ist. Bevorzugt ist dabei die Ausgestaltung, dass mindestens 80 % der Anlagefläche oder sogar die gesamte Anlagefläche mit dem mindestens einen Rollkörper gebildet ist.

Bei einer Ausgestaltung der Anlagefläche von mindestens 50 % mit einem Rollkörper kann die Reibung beim Vorbeiführen der mindestens einen Metallfolie am Führungselement bereits deutlich reduziert werden. Zur Gewährleistung einer Vorspannung ist es gegebenenfalls vorteilhaft, ein gewisses Maß an Reibung zuzulassen. Insbesondere bei großen Wabenkörpern bzw. Wabenstrukturen ist ein höherer Anteil der Anlagefläche mit dem mindestens einen Rollkörper gebildet, so dass das Kriterium der Reibungssenkung im Vordergrund steht.

Vorteilhaft ist auch, dass wenigstens ein Führungselement des mindestens einen Fonnsegments so gestaltet ist, dass der mindestens eine Rollkörper hin zum zentralen Bereich der Vorrichtung hervorstehend ausgebildet ist. Damit ist insbesondere gemeint, dass das Führungselement und die Klemmbacke aus einem Teil mit einer ineinander übergehenden Außenfläche gefertigt sind, wobei der separate Rollkörper etwas über dieses Teil bzw. dessen Außenfläche hervorsteht. Damit ist sichergestellt, dass die Metallfolien tatsächlich nur am Rollkörper anliegen.

Weiter wird ein Verfahren zur Herstellung eines Wabenkörpers mit zumindest teilweise strukturierten Metallfolien vorgeschlagen. Dieses Verfahren umfasst zumindest folgende Schritte:
a) Bereitstellen mindestens einer glatten Metallfolie und einer strukturierten Metallfolie,
b) Wickeln der Metallfolien zu einer Wabenstruktur mit einer Vorrichtung der erfindungsgemäßen Art,
c) Einfügen der Wabenstruktur in ein Gehäuse, und
d) Verbinden der Metallfolien mit dem Gehäuse.

Dieses Verfahren kann zur Herstellung eines Wabenkörpers mit allen eingangs aufgeführten Bauformen eingesetzt werden. Im nachfolgenden wird das Verfahren beispielhaft nur mit Bezug auf die Stapel-Bauform erläutert, was die Erfindung jedoch nicht einschränken soll.

Demnach werden in Schritt a) bevorzugt eine Mehrzahl von glatten und strukturierten Metallfolien bereitgestellt. Diese werden abwechselnd aufeinander gelegt, so dass aufgrund der Struktur der strukturierten Metallfolie Kanäle gebildet sind. Diese glatten und strukturierten Metallfolien werden nun an mindestens einem Wickeldorn der Vorrichtung bzw. der damit gebildeten Aufnahme fixiert und gewickelt. Beim Wickeln führt der Wickeldorn zumindest zeitweise eine rotatorische Bewegung aus, wobei zumindest ein Teil der Metallfolien einerseits mit dem Wickeldorn und andererseits mit dem mindestens einen Formsegment, und insbesondere mit dem Führungselement bzw. dessen Rollkörper, in Kontakt ist. Insbesondere gegen Ende des Wickelprozesses werden die Klemmbacken in Richtung des zentralen Bereichs verschwenkt, so dass die Enden der Metallfolien ebenfalls in Richtung des zentralen Bereichs gebogen werden. Damit wird eine Wabenstruktur gebildet, die im wesentlichen der gewünschten Form des herzustellenden Wabenkörpers entspricht. Nach dem vorstehend erläuterten Schritt b) wird diese Wabenstruktur zumindest teilweise in ein Gehäuse eingefügt (Schritt c)). Dabei kann die Wabenstruktur zumindest zeitweise noch in der Vorrichtung verbleiben oder aber an eine weitere Apparatur übergeben werden. Schließlich werden die Metallfolien mit dem Gehäuse bzw. untereinander zumindest teilweise miteinander verbunden, vgl. Schritt d). Die Verbindung umfasst insbesondere das Verschweißen und/oder Hartlöten der Metallfolien bzw. der Metallfolien mit dem Gehäuse. Die Bereitstellung von Fügematerialien, wie beispielsweise Hartlot, kann vor Schritt b) aber ebenso auch nach Schritt b) oder Schritt c) erfolgen. Bevorzugt ist, dass nur ein relativ kleiner Anteil der möglichen Verbindungsstellen bzw. aller Kontaktbereiche der Metallfolien untereinander bzw. der Metallfolien und des Gehäuses tatsächlich fügetechnisch verbunden sind, wobei dieser Anteil gerade bei großen Wabenkörpern beispielsweise deutlich unter 30 % liegt. Damit wird dem thermischen Verhalten eines solchen Wabenkörpers im Abgassystem Rechnung getragen.

Bezüglich des Verfahrens ist es vorteilhaft, dass Schritt a) ein abwechselndes Aufeinanderlegen von glatten Metallfolien und gewellten Metallfolien zu einem Stapel umfasst. Dabei ist auch bevorzugt, dass bei Schritt b) mehrere Stapel gleichzeitig gewickelt werden, wobei jedem Stapel ein Umschlingungsdorn und ein Formsegment zugeordnet ist, die mit dem Stapel während des Wickelns in Kontakt sind. Bevorzugt ist dabei die Herstellung eines Wabenkörpers mit einer Vorrichtung, die drei Umschlingungsdorne und drei Formsegment aufweist. Weitere Details hierzu werden im Zusammenhang mit den Erläuterungen zu den Figuren angeführt.

Mit der erfindungsgemäßen Vorrichtung können bevorzugt solche Wabenkörper hergestellt werden, die eine Vielzahl von Kanälen aufweisen, die sich von einer ersten Stirnseite hin zu einer zweiten Stirnseite erstrecken, wobei die Wabenstruktur eine Ausdehnung größer als 150 mm hat. Mit dem Begriff "Ausdehnung" ist bei zylindrischer Gestalt der Wabenstruktur der Durchmesser und bei anderen Formen eine entsprechende, größtmögliche Abmessung gemeint. Damit wird hier insbesondere auf große Wabenstrukturen abgestellt, bei der die reduzierte Reibung während des Wickelprozesses in besonderem Maße zu einem erkennbar homogeneren Aufbau der Wabenstruktur führt.

Ebenso können Wabenkörper mit dem vorstehend beschriebenen Verfahren in der Art hergestellt werden, dass diese mit einer Wabenstruktur ausgeführt ist, welche eine Vielzahl von Kanälen aufweist, die sich von einer Stirnseite hin zu einer zweiten Stirnseite erstrecken, wobei die Wabenstruktur eine Ausdehnung größer als 150 mm hat.

Im Zusammenhang mit dem bevorzugten Einsatzgebiet ist anzumerken, dass die Kombination einer Wabenstruktur (hergestellt mit einer erfindungsgemäßen. Vorrichtung), und/oder mit einem Wabenkörper (hergestellt mit einem Verfahren wie oben beschrieben) mit einem Fahrzeug, insbesondere einem Lastkraftwagen, Vorteile hinsichtlich der Schadstoffumsetzung und der Langlebigkeit der Wabenstruktur bzw. des Wabenkörpers zur Folge hat.

Die Erfindung sowie das technische Umfeld werden anhand der Figuren weiter erläutert. Es ist darauf hinzuweisen, dass die Figuren lediglich besonders bevorzugte Ausführungsvarianten der Erfindung zeigen, diese aber nicht begrenzen. Weiter sind die Figuren regelmäßig schematischer Natur, so dass sie üblicherweise nicht zur Veranschaulichung von Größenverhältnissen geeignet sind. Es zeigten demnach:
Fig. 1: eine Ausführungsvariante eines Formsegments in der Draufsicht,
Fig. 2: einen Querschnitt durch das in Fig. 1 dargestellte Formsegment im Bereich des Führungselements,
Fig. 3: eine erste Phase des Wickelprozesses,
Fig. 4: eine zweite Phase des Wickelprozesses,
Fig. 5: eine dritte Phase des Wickelprozesses,
Fig. 6: eine vierte Phase des Wickelprozesses
Fig. 7: eine fünfte Phase des Wickelprozesses,
Fig. 8: ein Fahrzeug mit einer Abgasanlage aufweisend einen Wabenkörper, und Fig. 9: einen Wabenkörper.

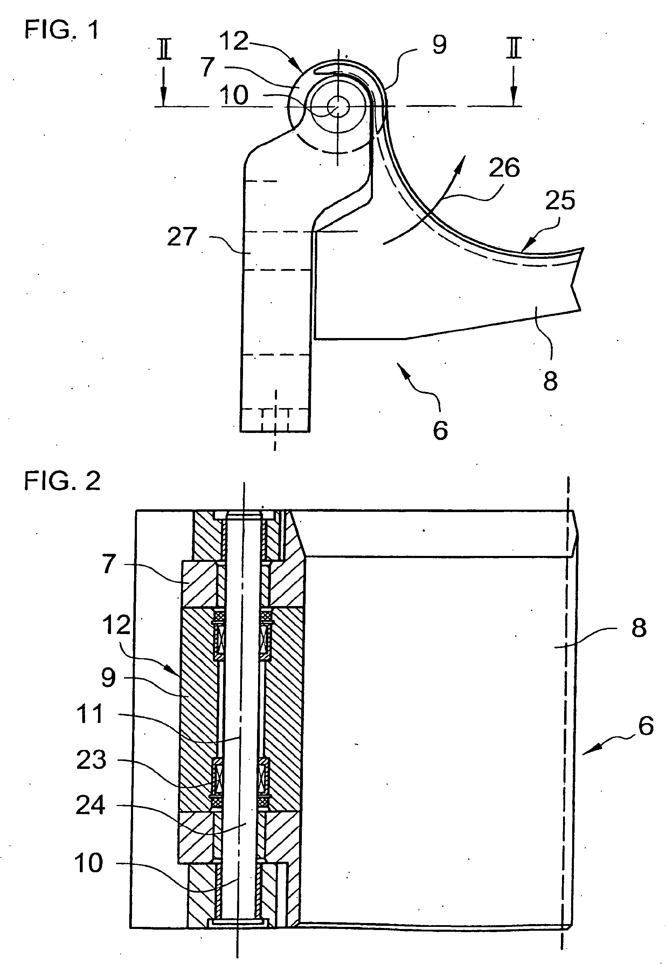

Fig. 1 zeigt schematisch die Draufsicht auf eine Ausführungsvariante eines Formsegments 6. Das Formsegment 6 umfasst einen Tragarm 27, an welchem eine Klemmbacke 8 fixiert ist, die bezüglich des Tragarms 27 in einer Schwenkrichtung 26 verschwenkbar ist. Die Klemmbacke 8 weist eine Konturfläche 25 auf, die insbesondere bei der ausgelenkten finalen Position (hier ist nur die eingeschwenkte Position dargestellt) mit den Metallfolien in Kontakt kommt. Sich links an die Konturfläche 25 der Klemmbacke 5 anschließend ist ein Führungselement 7 zum Führen der mindestens einen (hier nicht dargestellten) Metallfolie mit einem Rollkörper 9 ausgebildet. Der Rollkörper 9 ist dabei fluchtend zur Schwenkachse 10 der Klemmbacke 8 angeordnet.

Der in Fig. 1 angedeutete Schnitt durch das Formsegment 6 ist nun in Fig. 2 dargestellt. Hier lässt sich insbesondere der Aufbau im Bereich des Führungselements 7 veranschaulichen. Das Führungselement 7 ist mit einem zylinderförmigen Rollkörper 9 ausgeführt, welcher über einen Bolzen 24 drehbar gelagert ist. Hierzu sind zwei Lager 23 zwischen Rollkörper 9 und Bolzen 24 vorgesehen. Die Rotationsachse 11 des Rollkörpers 9 stimmt dabei mit der Schwenkachse 10 überein. Bei der hier ausgestellten Ausführungsvariante schließt die Außenfläche des Rollkörpers mit der des Führungselementes 7 ab, so dass eine gemeinsame Anlagefläche 12 für die Metallfolien gebildet ist.

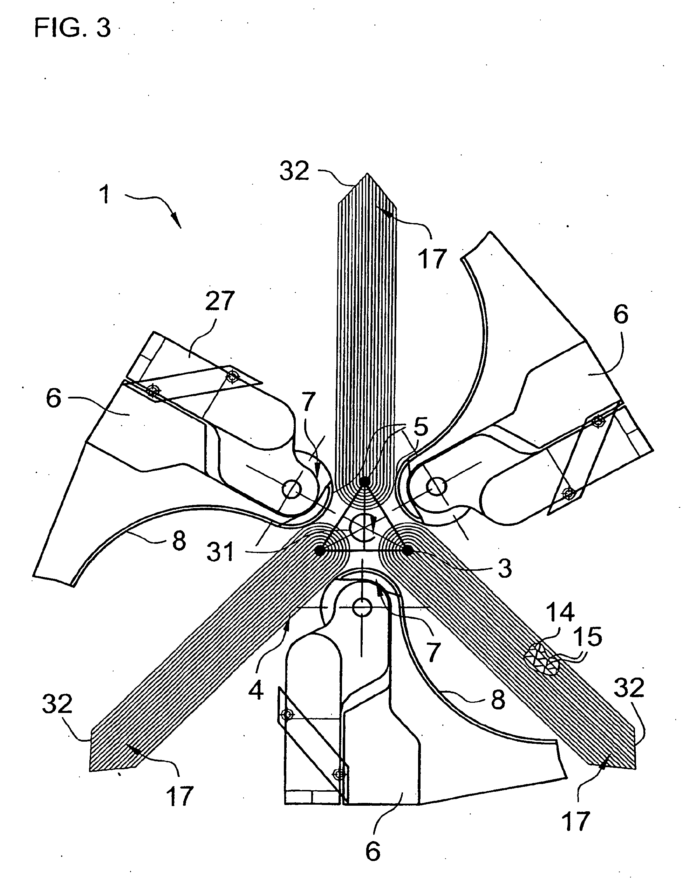

Die Fig. 3 bis 7 veranschaulichen nun verschiedene Phasen einer bevorzugten Ausführungsvariante des Wickelprozesses, wobei drei Stapel 17 mit glatten Metallfolien 14 und strukturierten Metallfolien 15 gegeneinander verwunden werden.

Aus Fig. 3 ist erkennbar, dass die Stapel 17 zunächst in der Mitte umgelegt worden sind, so dass die Enden 32 der Metallfolien nur auf einer Seite des Stapels 17 angeordnet sind. Jeder Stapel 17 wurde mit der den Enden 32 der Metallfolien 14, 15 gegenüberliegenden Seite einem separaten Umschlingungsdorn 3 zugeordnet. Der jeweilige Umschlingungsdorn 3 ist nur im Kontakt mit der innersten Metallfolie 14, die ihn größtenteils umgibt. Von außen werden die drei dargestellten Formsegmente 6 nun in den zentralen Bereich 4 der Vorrichtung 1 bewegt, so dass die Führungselemente 7 zumindest teilweise an den äußeren Metallfolien der Stapel 17 zur Anlage kommen. Damit ist nun eine Aufnahme 5 für jeden Stapel 17 durch die benachbarten Führungselemente 7 und dem jeweilig zugeordneten Umschlingungsdorn 3 gebildet. Dies stellt eine Art Ausgangsposition für den sich nun anschließenden Wickelprozess dar. Hierbei beginnen sich nun die drei Umschlingungsdorne 3 in der dargstellten Drehrichtung 21 zu drehen, wobei der Abstand der Umschlingungsdorne 3 zueinander gleich bleibt.

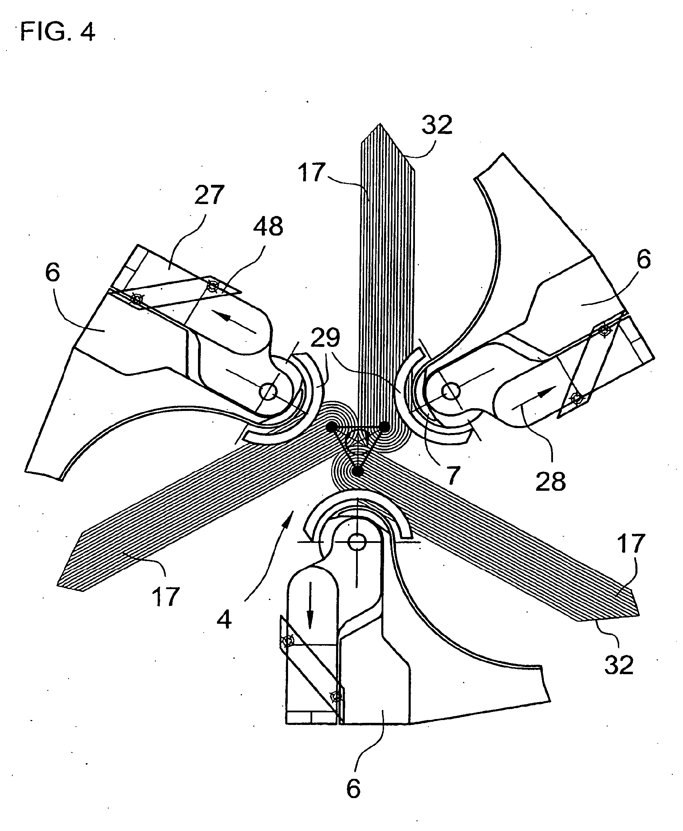

In einer nachfolgenden Phase des Wickelprozesses liegt beispielsweise die Situation, wie sie in Fig. 4 dargestellt ist, vor. Während der bereits ausgeführte Drehbewegung der Umschlingungsdorne 3 bilden die Führungselemente 7 jeweils einen Führungsbereich 29 für die Stapel 17. Dieser Führungsbereich 29 wird im wesentlichen durch den (hier nicht gekennzeichneten) Rollkörper des Führungselementes 7 gebildet. Zum Bewegungsablauf der Formsegmente 6 ist anzumerken, dass sich diese in einer Translationsrichtung 28 vom zentralen Bereich 4 weg bewegen. Dies ist beispielsweise anhand der relativen Lage von dem Tragarm 27 und der Halterung 48 in allen Phasen erkennbar, wobei die Halterung 48 beispielsweise mit einer (hier nicht dargestellten) Grundplatte der Vorrichtung 1 verbunden ist.

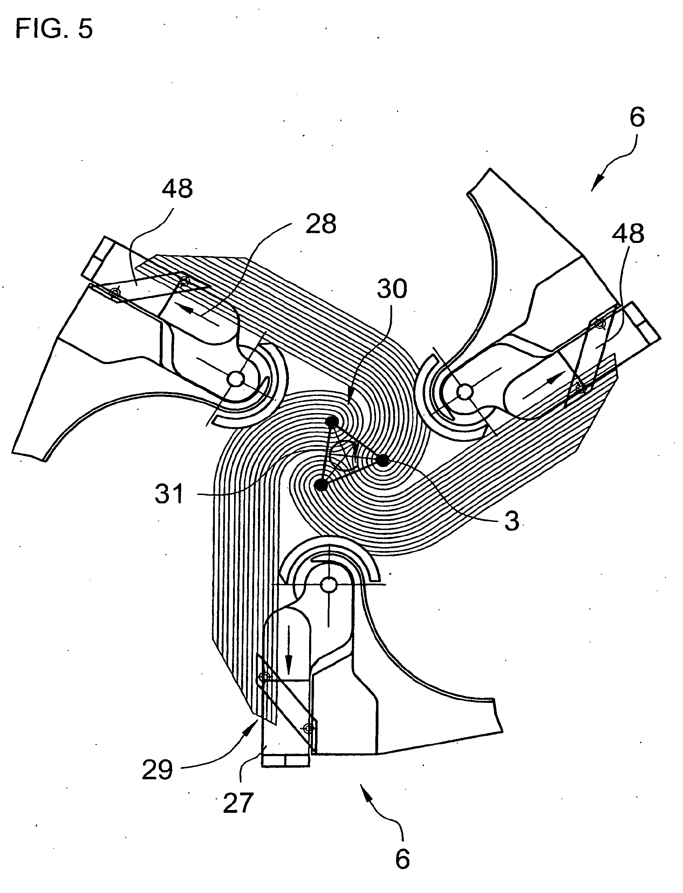

Infolge des fortschreitenden Drehprozesses der Umschlingungsdorne 3 wird schließlich auch ein Führungsbereich 29 im Bereich des Tragarms 27 gebildet, so dass die Stapel 17 mit jeweils mehreren Formsegmenten 6 in den zentralen Bereich der Vorrichtung 1 hineingeführt werden, wie das in Fig. 5 veranschaulicht ist. Im Zentrum der Vorrichtung 1 ist zu erkennen, dass die Stapel 17 zunehmend zur Anlage aneinander kommen und einander teilweise umschließen. Infolge der sich aufbauenden Wabenstruktur 2 im zentralen Bereich 4 der Vorrichtung 1 werden die einzelnen Formsegmente 6 weiter in Translationsrichtung 28 nach außen bewegt.

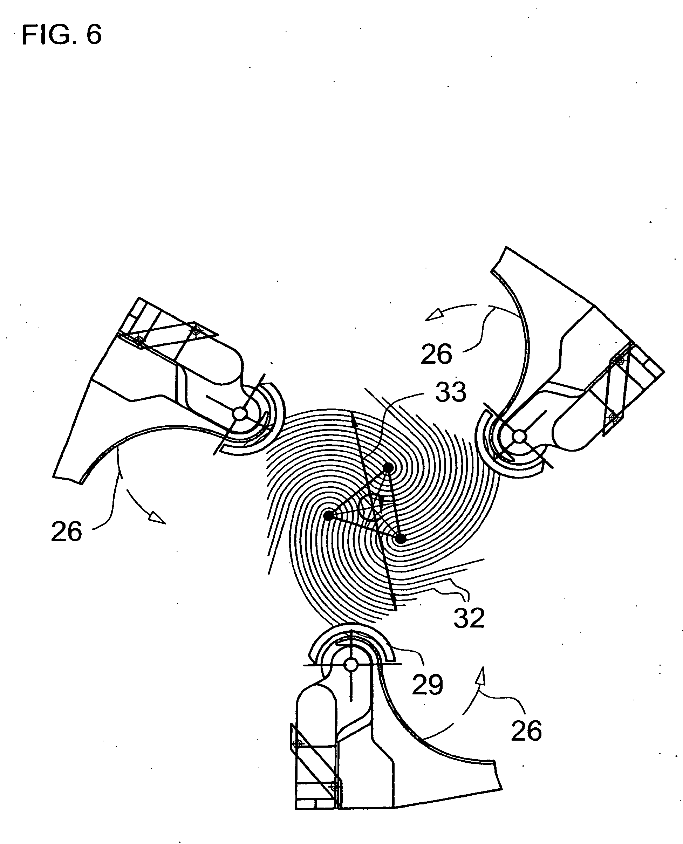

Fig. 6 veranschaulicht nun eine Übergangsphase vom reinen Wickelprozess hin zu einem Umformprozess. Hier liegen nunmehr die Führungsbereiche 29, die mit den Führungselementen 7 bzw. den Rollkörper 9 gebildet sind, bereits im Bereich der Enden 32 der Metallfolien 14, 15. Zu diesem Zeitpunkt kann die Wabenstruktur 2 nicht mehr weiter aufgebaut werden, da nur noch drei punktuelle Widerlager für die Vielzahl der Metallfolien 14, 15 mit den Formsegmenten 6 gebildet sind. Damit ist ein Durchmesser 33 gegeben, bei dem nicht mehr ein Aufbau der Wabenstruktur 2 nicht mehr von "innen nach außen" fortgesetzt werden kann, sondern im folgenden von "außen nach innen" vorgenommen wird. Dazu werden nun die Klemmbacken 8 hin zum zentralen Bereich 4 verschwenkt, wie dies mit der gestrichelt angedeuteten Schwenkrichtung 26 veranschaulicht wird.

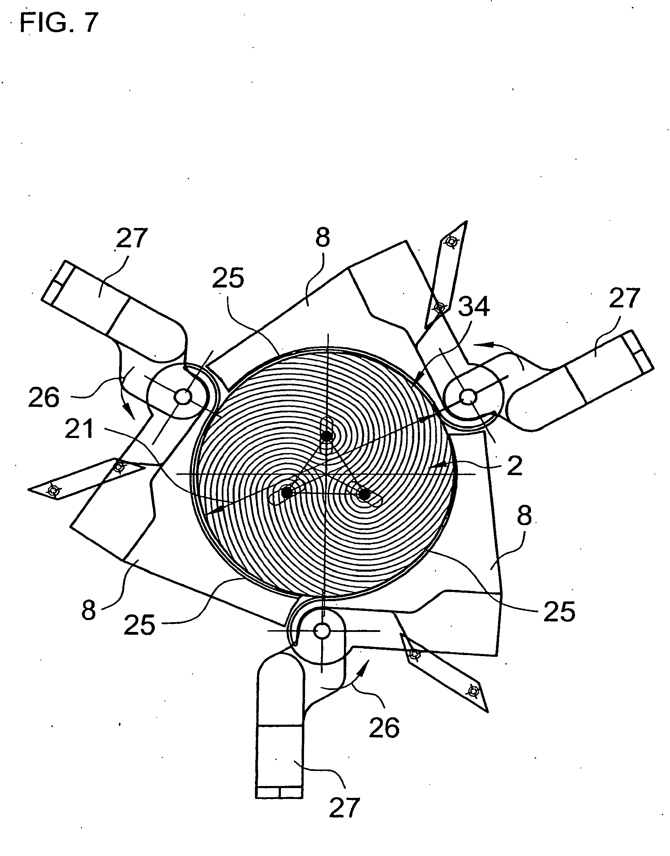

Fig. 7 veranschaulicht eine letzte Phase des Wickelprozesses. Zu diesem Zeitpunkt sind die Klemmbacken 8 komplett in Schwenkrichtung 26 ausgelenkt worden. Dabei bilden die Konturflächen 25 den Umfang 34 der Wabenstruktur 2 mit der gewünschten Ausdehnung 21 ab. Das heißt mit anderen Worten, dass alle Enden 32 der Metallfolien 14, 15 nunmehr an einer Konturfläche 25 eines Formsegmentes 6 anliegen. Bei der hier gezeigten Variante ergeben die Konturflächen 25 der Formsegmente 6 eine Kreis- bzw. Zylinderform, dies ist jedoch nicht zwingend der Fall. Gleichfalls können auch andere Konturen hergestellt werden.

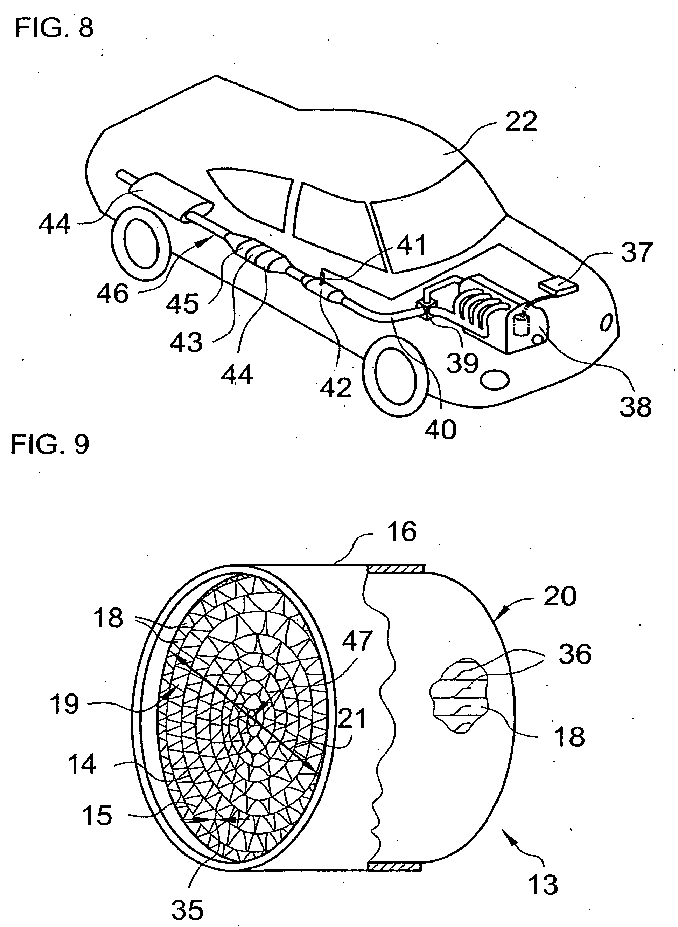

Fig. 8 soll den bevorzugten Einsatz eines mit der Vorrichtung bzw. dem beschriebenen Verfahren hergestellten Wabenkörpers veranschaulichen. Der Einsatz liegt insbesondere im Automobilbereich. Dargestellt ist ein Fahrzeug 22, welches eine Verbrennungskraftmaschine 38 (z. B. einen Otto oder einen Dieselmotor) aufweist. Die Verbrennungskraftmaschine 38 wird über eine Motorsteuerung 37 geregelt betrieben, wobei in der.Abgasanlage 46 eine Messvorrichtung 41 zur Bestimmung von Bestandteilen oder Bedingungen in der Abgasanlage 46 vorgesehen ist. Aufgrund der erfassten Messwerte kann über die Motorsteuerung 37 die Betriebsweise der Verbrennungskraftmaschine 38 beeinflusst bzw. geregelt werden. Die Abgasanlage 46 wird dabei in einer bevorzugten Strömungsrichtung von dem Abgas durchströmt, wobei es nacheinander folgende Komponenten durchströmt, die zumindest teilweise über eine Abgasleitung 40 miteinander verbunden sind: Turbolader 39, Strömungsmischer 42, einen katalytischen Konverter 44 (der als Oxidationskatalysator ausgeführt ist), eine Partikelfalle 43, einen Adsorber 45 sowie einen abschließenden weiteren katalytischen Konverter 44, beispielsweise einen Drei-Wege-Katalysator.

Fig. 9 veranschaulicht schematisch und in einer perspektivischen Darstellung eine Ausführungsvariante eines spiralig um einen Wickelpunkt 47 aufgebauten Wabenkörpers 13. Dieser Wabenkörper 13 hat eine glatte Metallfolie 14 und eine gewellte, strukturierte Metallfolie 15, die spiralförmig so angeordnet sind, dass eine Vielzähl von Kanälen 18 gebildet sind, die sich von einer ersten Stirnseite 19 hin zu einer zweiten Stirnseite 20 erstrecken, wobei die Ausdehnung 21 größer als 150 mm ist. Im Inneren der Kanäle 18 sind Mikrostrukturen 36 zur Strömungsbeeinflussung vorgesehen. Bevorzugt weisen beide Metallfolien 14, 15 die gleiche Foliendicke 35 auf, die etwa im Bereich von 0,15 mm bis 0,03 mm liegt.

### Bezugszeichenliste

- 1: Vorrichtung
- 2: Wabenstruktur
- 3: Umschlingungsdorn
- 4: zentraler Bereich
- 5: Aufnahme
- 6: Formsegment
- 7: Führungselement
- 8: Klemmbacke
- 9: Rollkörper
- 10: Schwenkachse
- 11: Rotationsachse
- 12: Anlagefläche
- 13: Wabenkörper
- 14: glatte Metallfolie
- 15: strukturierte Metallfolie
- 16: Gehäuse
- 17: Stapel
- 18: Kanal
- 19: erste Stirnseite
- 20: zweite Stirnseite
- 21: Ausdehnung
- 22: Fahrzeug
- 23: Lager
- 24: Bolzen
- 25: Konturfläche
- 26: Schwenkrichtung
- 27: Tragarm
- 28: Translationsrichtung
- 29: Führungsbereich
- 30: Umschlingung
- 31: Drehrichtung
- 32: Ende
- 33: Durchmesser
- 34: Umfang
- 35: Foliendicke
- 36: Mikrostruktur
- 37: Motorsteuerung
- 38: Verbrennungskraftmaschine
- 39: Turbolader
- 40: Abgasleitung
- 41: Messvorrichtung
- 42: Strömungsmischer
- 43: Partikelfalle
- 44: Konverter
- 45: Adsorber
- 46: Abgasanlage
- 47: Wickelpunkt
- 48: Halterung

## Patentansprüche

1. Vorrichtung (1) zum Wickeln zumindest teilweise strukturierter Metallfolien zu einer Wabenstruktur (2) umfassend wenigstens
- mindestens einen Umschlingungsdorn (3) in einem zentralen Bereich (4) der Vorrichtung (1), der eine Aufnahme (5) für mindestens eine Metallfolie aufweist,
- Formsegmente (6), welche wenigstens ein Führungselement (7) zum Führen der mindestens einen Metallfolie während des Wickelns und wenigstens eine schwenkbare Klemmbacke (8) aufweisen, wobei die Formsegmente (6) in einer Translationsrichtung (28) vom zentralen Bereich (4) weg bewegbar sind und die schwenkbaren Klemmbacken (8) in ihrer ausgeschwenkten Position den zentralen Bereich (4) der Vorrichtung (1) vollständig umschließen, wobei sie damit die Außenkontur der Wabenstruktur (2) abbilden,
**dadurch gekennzeichnet, daß** das wenigstens eine Führungselement (7) mit mindestens einem Rollkörper (9) ausgeführt ist.

2. Vorrichtung (1) nach Anspruch 1, bei der das mindestens eine Formsegment (6) relativ zu dem mindestens einen Umschlingungsdorn (3) bewegbar ist.

3. Vorrichtung (1) nach Anspruch 1 oder 2, bei der das mindestens eine Formsegment (6) mit einem Führungselement (7) und einer Klemmbacke (8) ausgeführt ist, wobei das Führungselement (7) und die Klemmbacke (8) aneinander angrenzend angeordnet sind.

4. Vorrichtung (1) nach einem der vorhergehenden Ansprüche, bei der die wenigstens eine Klemmbacke (8) des mindestens einen Formsegments (6) eine Schwenkachse (10) aufweist, die mit einer Rotationsachse (11) des mindestens einen Rollkörpers (9) übereinstimmt.

5. Vorrichtung (1) nach einem der vorhergehenden Ansprüche, bei der wenigstens ein Führungselement (7) des mindestens einen Formsegments (6) eine Anlagefläche (12) für die mindestens eine Metallfolie bildet, wobei mindestens 50 % der Anlagefläche (12) mit dem mindestens einen Rollkörper (9) gebildet ist.

6. Vorrichtung (1) nach einem der vorhergehenden Ansprüche, bei der wenigstens ein Führungselement (7) des mindestens einen Formsegments (6) so gestaltet ist, dass der mindestens eine Rollkörper (9) hin zum zentralen Bereich (4) der Vorrichtung (1) hervorstehend ausgebildet ist.

7. Verfahren zur Herstellung eines Wabenkörpers (13) mit zumindest teilweise strukturierten Metallfolien umfassend zumindest folgende Schritte:
a) Bereitstellen mindestens einer glatten Metallfolie (14) und einer strukturierten Metallfolie (15),
b) Wickel der Metallfolien zu einer Wabenstruktur (2),
c) Einfügen der Wabenstruktur (2) in ein Gehäuse (16), und
d) Verbinden der Metallfolien (14, 15) mit dem Gehäuse (16),
**dadurch gekennzeichnet, daß** der Schritt b) mit einer Vorrichtung nach einem der Ansprüche 1 bis 6 erfolgt.

8. Verfahren nach Anspruch 7, bei dem Schritt a) ein abwechselndes Aufeinanderlegen von glatten Metallfolien (14) und gewellten Metallfolien (15) zu einem Stapel (17) umfasst.

9. Verfahren nach Anspruch 8, bei dem Schritt b) das gleichzeitige Wickeln mehrerer Stapel (17) umfasst, wobei jedem Stapel (17) ein Umschlingungsdorn (3) und ein Formsegment (6) zugeordnet ist, die mit diesem Stapel (17) während des Wickeln in Kontakt sind.

## Claims

1. An apparatus (1) for winding at least partially structured metal foils to form a honeycomb structure (2), at least comprising
- at least one wrap-around mandrel (3) in a central region (4) of the apparatus (1), which has a receiving part (5) for at least one metal foil,
- shaping segments (6), which have at least one guide element (7) for guiding the at least one metal foil during the winding and at least one pivotable clamping jaw (8), wherein the shaping segments (6) are moveable in a translational direction (28) away from the central region (4) and the pivotable clamping jaws (8) in their pivoted-out position completely surround the central region (4) of the apparatus (1), so that they then simulate the external contour of the honeycomb structure (2),
**characterized in that**
the at least one guide element (7) is designed with at least one roll body (9).

2. The apparatus (1) according to claim 1, in which the at least one shaping segment (6) is movable relative to the at least one wrap-around mandrel (3).

3. The apparatus (1) according to claim 1 or 2, in which the at least one shaping segment (6) is designed with a guide element (7) and a clamping jaw (8), wherein the guide element (7) and the clamping jaw (8) are arranged adjacent to one another.

4. The apparatus (1) according to one of the preceding claims, in which the at least one clamping jaw (8) of the at least one shaping segment (6) has a pivot axis (10) which coincides with an axis of rotation (11) of the at least one roll body (9).

5. The apparatus (1) according to one of the preceding claims, in which at least one guide element (7) of the at least one shaping segment (6) forms a contact surface (12) for the at least one metal foil, wherein at least 50% of the contact surface (12) is formed by the at least one roll body (9).

6. The apparatus (1) according to one of the preceding claims, in which at least one guide element (7) of the at least one shaping segment (6) is configured in such a way that the at least one roll body (9) is formed so as to protrude toward the central region (4) of the apparatus (1).

7. A process for producing a honeycomb body (13) with at least partially structured metal foils, at least comprising the following steps:
a) providing at least one smooth metal foil (14) and a structured metal foil (15),
b) winding the metal foils to form a honeycomb structure (2),
c) introducing the honeycomb structure (2) into a housing (16), and
d) joining the metal foils (14, 15) to the housing (16),
**characterized in that**
step b) is operated by using an apparatus according to one of claims 1 to 6.

8. The process according to claim 7, in which step a) comprises placing smooth metal foils (14) and corrugated metal foils (15) on top of one another alternately to form a stack (17).

9. The process according to claim 8, in which step b) comprises simultaneously winding a plurality of stacks (17), wherein each stack (17) is assigned a wrap-around mandrel (3) and a shaping segment (6), which are in contact with said stack (17) during the winding.

## Revendications

1. Dispositif (1) destiné à l'enroulement de feuilles métalliques au moins partiellement structurées en une structure de nids d'abeilles (2) au moins comprenant
- au moins un mandrin d'enlacement (3) dans une région centrale (4) du dispositif (1) qui a un logement (5) pour au moins une feuille métallique,
- des segments de façonnage (6) qui ont au moins un élément de guidage (7) pour guider l'au moins une feuille métallique durant l'enroulement et au moins une mâchoire de serrage (8) pouvant être pivotée, les segments de façonnage (6) pouvant être déplacés dans une direction translatoire (28) à partir de la région centrale (4) et dans leur position déboîtée les mâchoires de serrage pivotables (8) entourent complètement la région centrale (4) du dispositif (1), tout en figurant avec cela le contour extérieur de la structure en nids d'abeilles (2),
**caractérisé en ce qu'**au moins un élément de guidage (7) est réalisé avec au moins un corps de roulement (9).

2. Dispositif (1) selon la revendication 1, dans le cas duquel l'au moins un segment de façonnage (6) est mobile relativement à l'au moins un mandrin d'enlacement (3).

3. Dispositif (1) selon la revendication 1 ou 2, dans le cas duquel l'au moins un segment de façonnage (6) est réalisé avec un élément de guidage (7) et avec une mâchoire de serrage (8), l'élément de guidage (7) et la mâchoire de serrage (8) étant agencés de façon adjacente.

4. Dispositif (1) selon l'une des revendications précédentes, dans le cas duquel l'au moins une mâchoire de serrage (8) de l'au moins un segment de façonnage (6) a un axe de pivotement (10) qui concorde avec un axe de rotation (11) de l'au moins un corps de roulement (9).

5. Dispositif (1) selon l'une des revendications précédentes dans le cas duquel au moins un élément de guidage (7) de l'au moins un segment de façonnage (6) forme une surface d'appui (12) pour l'au moins une feuille métallique, au moins 50 % de la surface d'appui (12) étant formées avec l'au moins un corps de roulement (9).

6. Dispositif (1) selon l'une des revendications précédentes, dans le cas duquel au moins un élément de guidage (7) de l'au moins un segment de façonnage (6) est configuré de manière telle, qu'au moins un corps de roulement (9) est réalisé de manière à faire saillie vers la région centrale (4) du dispositif (1).

7. Procédé destiné à la fabrication d'un corps en nids d'abeilles (13) avec des feuilles métalliques au moins partiellement structurées, comprenant au moins les étapes suivantes :
a) mettre à disposition au moins une feuille métallique lisse (14) et une feuille métallique structurée (15),
b) enroulement des feuilles métalliques en une structure de nids d'abeilles (2).
c) introduction de la structure de nids d'abeilles (2) dans un boîtier (16) et
d) mettre en connexion les feuilles métalliques (14, 15) avec le boîtier (16),
**caractérisé en ce que** l'étape b) est effectuée avec un dispositif selon l'une des revendications 1 à 6.

8. Procédé selon la revendication 7, dans le cas duquel l'étape a) comprend la superposition alternante de feuilles métalliques lisses (14) et de feuilles métalliques ondulées (15) en une pile (17).

9. Procédé selon la revendication 8, dans le cas duquel l'étape b) comprend l'enroulement simultané d'une pluralité de piles (17), un mandrin d'enlacement (3) et un segment de façonnage (6) étant attribués à chaque pile (17), lesquels mandrin d'enlacement et segment de façonnage (6) sont en contact lors de l'enroulement.
